# EUROPEAN PATENT APPLICATION

(11) **EP 4 848 077 A1**
(43) Date of publication of application: **02.12.2026**
(21) Application number: 26180120.3
(22) Date of filing: 21.05.2026
(51) Int. Cl.: G06F 8/65, G06F 8/61, G06F 9/445

(54) **ELECTRONIC DEVICE CAPABLE OF GIVING USER OPPORTUNITY TO RECONSIDER PRESTORED EXECUTION CONDITION FOR JOB WHEN EXECUTION CONDITION ALLOWED TO BE SET IS CHANGED DUE TO UPDATE OF FIRMWARE, AND REPORT METHOD**

(30) Priority: 26.05.2025 JP 2025087043
(71) Applicant: KYOCERA Document Solutions Inc., Osaka-shi, Osaka 540-8585 (JP)
(72) Inventor: Morita, Keiko, Osaka-shi, 540-8585 (JP)
(74) Representative: Plougmann Vingtoft a/s

(57) **Abstract**

An electronic device includes a storage processing portion, a first determination processing portion, and a first report processing portion. The storage processing portion stores an execution condition for a job in a predetermined first storage portion, where the execution condition is set by an operation performed by a user. When firmware of the electronic device is updated and when the execution condition is stored in the first storage portion, the first determination processing portion determines whether the execution condition allowed to be set is changed due to the update of the firmware. When the first determination processing portion has determined that the execution condition allowed to be set is changed due to the update of the firmware, the first report processing portion reports that the execution condition allowed to be set is changed due to the update of the firmware.

## Description

### BACKGROUND

The present disclosure relates to an electronic device and a report method.

An electronic device such as a multifunction peripheral that can update firmware of the electronic device is known.

### SUMMARY

An electronic device according to an aspect of the present disclosure includes a storage processing portion, a first determination processing portion, and a first report processing portion. The storage processing portion stores an execution condition for a job in a predetermined first storage portion, where the execution condition is set by an operation performed by a user. When firmware of the electronic device is updated and when the execution condition is stored in the first storage portion, the first determination processing portion determines whether the execution condition allowed to be set is changed due to the update of the firmware. When the first determination processing portion has determined that the execution condition allowed to be set is changed due to the update of the firmware, the first report processing portion reports that the execution condition allowed to be set is changed due to the update of the firmware.

A report method according to another aspect of the present disclosure is performed by an electronic device, and includes performing storing, performing determination, and performing reporting. In the storing, an execution condition for a job is stored in a predetermined first storage portion, where the execution condition is set by an operation performed by a user. In the determination, when firmware of the electronic device is updated and when the execution condition is stored in the first storage portion, it is determined whether the execution condition allowed to be set is changed due to the update of the firmware. In the reporting, when the execution condition allowed to be set has been determined by the determination to be changed due to the update of the firmware, it is reported that the execution condition allowed to be set is changed due to the update of the firmware.

This Summary is provided to introduce a selection of concepts in a simplified form that are further described below in the Detailed Description with reference where appropriate to the accompanying drawings. This Summary is not intended to identify key features or essential features of the claimed subject matter, nor is it intended to be used to limit the scope of the claimed subject matter. Furthermore, the claimed subject matter is not limited to implementations that solve any or all disadvantages noted in any part of this disclosure.

### BRIEF DESCRIPTION OF THE DRAWINGS

Fig. 1 is a block diagram illustrating a system configuration of an image forming apparatus according to embodiments of the present disclosure;
Fig. 2 illustrates an example of an execution condition setting screen displayed by the image forming apparatus according to the embodiments of the present disclosure;
Fig. 3 illustrates an example of execution condition data stored by the image forming apparatus according to the embodiments of the present disclosure;
Fig. 4 illustrates an example of a first report screen displayed by the image forming apparatus according to the embodiments of the present disclosure;
Fig. 5 illustrates an example of a setting operation receiving screen displayed by the image forming apparatus according to the embodiments of the present disclosure;
Fig. 6 illustrates an example of a second report screen displayed by the image forming apparatus according to the embodiments of the present disclosure;
Fig. 7 illustrates another example of the second report screen displayed by the image forming apparatus according to the embodiments of the present disclosure;
Fig. 8 is a flowchart of an example of a second report process performed by the image forming apparatus according to the embodiments of the present disclosure;
Fig. 9 is a flowchart of an example of a process of setting a suspension period of time that is performed by the image forming apparatus according to the embodiments of the present disclosure; and
Fig. 10 is a flowchart of an example of a first report process performed by the image forming apparatus according to the embodiments of the present disclosure.

### DETAILED DESCRIPTION

Embodiments of the present disclosure will now be described below with reference to the accompanying drawings. Note that the following embodiments are merely examples in which the present disclosure is embodied, and are not intended to limit the scope of the present disclosure.

### Configuration of Image Forming Apparatus 100

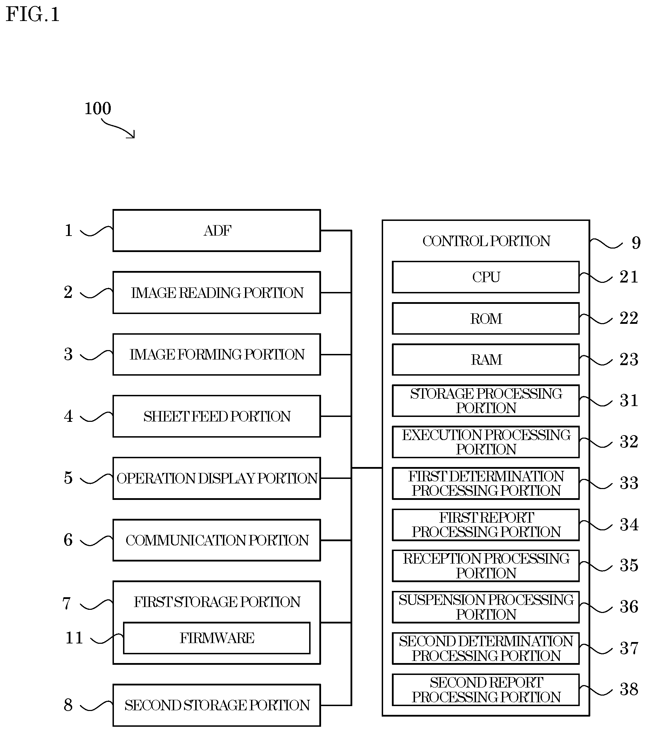

A configuration of an image forming apparatus 100 according to embodiments of the present disclosure is described with reference to Fig. 1.

The image forming apparatus 100 is a multifunction peripheral that includes a plurality of functions such as a facsimile function and a copying function in addition to a scanning function to read a document to obtain an image of the document, and a printing function to form an image on a sheet on the basis of image data. The image forming apparatus 100 is an example of an electronic device of the present disclosure. Note that the present disclosure may be applied to an electronic device such as a scanner, a printer, a facsimile machine, a copying machine, a television, a rice cooker, or a washing machine.

As illustrated in Fig. 1, the image forming apparatus 100 includes an auto document feeder (ADF) 1, an image reading portion 2, an image forming portion 3, a sheet feed portion 4, an operation display portion 5, a communication portion 6, a first storage portion 7, a second storage portion 8, and a control portion 9.

The ADF 1 conveys a document read by the image reading portion 2 to obtain an image of the document. The ADF 1 includes a document setting portion, a plurality of conveying rollers, a document holding portion, and a sheet discharge portion.

The image reading portion 2 provides the scanning function. The image reading portion 2 includes a platen, a light source, a plurality of mirrors, an optical lens, and a charge coupled device (CCD). The image reading portion 2 reads a document conveyed by the ADF 1 to obtain an image of the document, and outputs image data that includes the image obtained by the reading. Further, the image reading portion 2 reads a document placed on the platen to obtain an image of the document, and outputs image data that includes the image obtained by the reading.

The image forming portion 3 provides the printing function. Specifically, the image forming portion 3 forms, by electrophotography, an image on a sheet supplied by the sheet feed portion 4. For example, the image forming portion 3 includes a plurality of image forming units, a laser scanning unit, an intermediate transfer belt, a secondary transfer roller, a fixing device, and a sheet discharge tray. Note that the image forming portion 3 may form, by another image formation approach such as ink-jetting, an image on a sheet supplied by the sheet feed portion 4.

The sheet feed portion 4 supplies sheets to the image forming portion 3. The sheet feed portion 4 includes a sheet cassette and a plurality of conveying rollers.

The operation display portion 5 is a user interface of the image forming apparatus 100. The operation display portion 5 includes a display portion and an operation portion. The display portion displays thereon various information in response to control instructions being given by the control portion 9. Specifically, the display portion is a display apparatus such as a liquid crystal display. The operation portion is used to input various information to the control portion 9 in response to the operation portion being operated by a user. Specifically, the operation portion is an operation apparatus that includes an operation key or a touchscreen.

The communication portion 6 is a communication interface that performs data communication with an external communication apparatus by wired or wirelessly.

The first storage portion 7 is a nonvolatile storage apparatus. For example, the first storage portion 7 is a nonvolatile memory such as a flash memory. As illustrated in Fig. 1, firmware 11 of the image forming apparatus 100 is stored in the first storage portion 7.

The second storage portion 8 is a nonvolatile storage apparatus. For example, the second storage portion 8 includes a solid state drive (SSD) and a hard disk drive (HDD). The second storage portion 8 stores therein image data output by the image reading portion 2. Further, the second storage portion 8 stores therein registration data registered by a user with the image forming apparatus 100. For example, the registration data includes address data indicating a transmission destination of the image data. Furthermore, the registration data includes user data regarding a user who uses the image forming apparatus 100.

The control portion 9 performs overall control on the image forming apparatus 100. As illustrated in Fig. 1, the control portion 9 includes a CPU 21, a ROM 22, and a RAM 23. The CPU 21 is a processor that performs various computational processes. The ROM 22 is a nonvolatile storage apparatus that has stored therein information regarding, for example, a control program used to cause the CPU 21 to perform various processes. The RAM 23 is a volatile or nonvolatile storage apparatus used as a temporary storage memory (a working region) for various processes performed by the CPU 21. The CPU 21 performs overall control on the image forming apparatus 100 by executing various control programs stored in the ROM 22, and the firmware 11 stored in the first storage portion 7.

In the image forming apparatus 100, an execution condition for a job that is set by an operation performed by a user is stored. Here, when the firmware 11 is updated in the image forming apparatus 100 after the execution condition is stored, the execution condition allowed to be set may be changed due to a function of the image forming apparatus 100 being changed due to the update of the firmware 11. In such a case, an opportunity to reconsider the stored execution condition is favorably given to the user.

However, in related art, there is no configuration in which the opportunity to reconsider the prestored execution condition can be given to a user when the execution condition allowed to be set is changed due to update of the firmware 11.

On the other hand, in the image forming apparatus 100 according to the embodiments of the present disclosure, the opportunity to reconsider the prestored execution condition can be given to a user when the execution condition allowed to be set is changed due to update of the firmware 11.

### Functional Configuration of Control portion 9

Next, a functional configuration of the control portion 9 is described with reference to Figs. 1 to 7.

As illustrated in Fig. 1, the control portion 9 includes a storage processing portion 31, an execution processing portion 32, a first determination processing portion 33, a first report processing portion 34, a reception processing portion 35, a suspension processing portion 36, a second determination processing portion 37, and a second report processing portion 38.

Specifically, the ROM 22 of the control portion 9 has prestored therein an operational control program used to cause the CPU 21 to serve as the processing portions described above. Further, the CPU 21 serves as the processing portions described above by executing the operational control program stored in the ROM 22.

Note that the operational control program is recorded in a computer-readable recording medium such as a CD, a DVD, or a flash memory, and may be read from the recording medium to be stored in a nonvolatile storage apparatus such as the first storage portion 7. Further, a portion of or all of the processing portions included in the control portion 9 may each include an electronic circuit. Further, the operational control program may be a program used to cause a plurality of processors to serve as the respective processing portions included in the control portion 9.

The storage processing portion 31 stores, in the first storage portion 7, the execution condition for the job, which is set by an operation performed by a user.

Specifically, the storage processing portion 31 stores, in the first storage portion 7, the execution condition for an erasure job, which is set by an operation performed by a user. The erasure job is a job executed to erase data stored in the second storage portion 8, such that the data becomes unrecoverable. For example, the erasure job is executed when the image forming apparatus 100 is thrown away, in order to prevent internal information from being leaked.

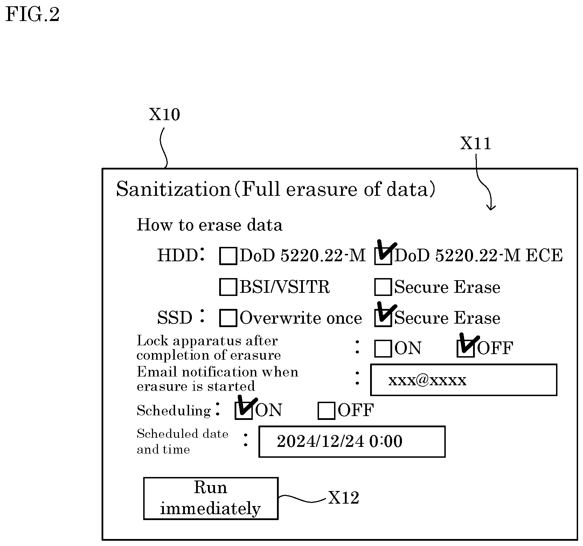

For example, the storage processing portion 31 displays an execution condition setting screen X10 illustrated in Fig. 2 on the operation display portion 5 in response to a predetermined operation being performed by a user on the operation display portion 5.

The execution condition setting screen X10 has a setting specification region X11 and an operation key X12 that are illustrated in Fig. 2.

An operation of specifying a setting that corresponds to the execution condition is received in the setting specification region X11 with respect to each set item regarding the erasure job.

For example, an operation of specifying one of the settings including "DoD 5220.22-M", "DoD 5220.22-M ECE", "BSI/VSITR", and "Secure Erase" is received in the setting specification region X11 with respect to "How to erase data from HDD" (the set item). Specifically, when a user operates a check box corresponding to one of the settings, the user can specify the setting corresponding to the operated check box. Fig. 2 illustrates the setting of "DoD 5220.22-M ECE" being specified.

Further, an operation of specifying one of the settings including "Overwrite once" and "Secure Erase" is received in the setting specification region X11 with respect to "How to erase data from SSD" (the set item). Fig. 2 illustrates the setting of "Secure Erase" being specified.

Furthermore, an operation of specifying one of the settings including "ON" and "OFF" is received in the setting specification region X11 with respect to "Lock apparatus after completion of erasure" (the set item). Fig. 2 illustrates the setting of "OFF" being specified.

Moreover, an operation of specifying a notification-destination email address (the setting) is received in the setting specification region X11 with respect to "Email notification when erasure is started" (the set item). Specifically, when a user inputs any email address to an email-address input field that corresponds to "Email notification when erasure is started", the user can specify the notification-destination email address (the setting). Fig. 2 illustrates "xxx@xxxx" being specified as the notification-destination email address (the setting).

Further, an operation of specifying one of the settings including "ON" and "OFF" is received in the setting specification region X11 with respect to "Scheduling" (the set item). Fig. 2 illustrates the setting of "ON" being specified.

Furthermore, an operation of specifying a date and time for starting executing the erasure job (the setting) is received in the setting specification region X11 with respect to "Scheduled date and time" (the set item). Specifically, when a user inputs any date and time to a date-and-time input field that corresponds to "Scheduled date and time", the user can specify the date and time for starting executing the erasure job (the setting). Fig. 2 illustrates "December 24, 2024, 0:00" being specified as the date and time for starting executing the erasure job (the setting).

The operation key X12 is used to input an instruction to execute the erasure job according to the execution condition set on the execution condition setting screen X10, or an instruction to store, in the first storage portion 7, the execution condition set on the execution condition setting screen X10.

When an operation performed by a user on the operation key X12 is received in a state in which "OFF" is specified as the setting for "Scheduled", the control portion 9 executes the erasure job according to the execution condition set on the execution condition setting screen X10.

Further, when an operation performed by the user on the operation key X12 is received in a state in which "ON" is specified as the setting for "Scheduled", the storage processing portion 31 stores, in the first storage portion 7, the execution condition set on the execution condition setting screen X10.

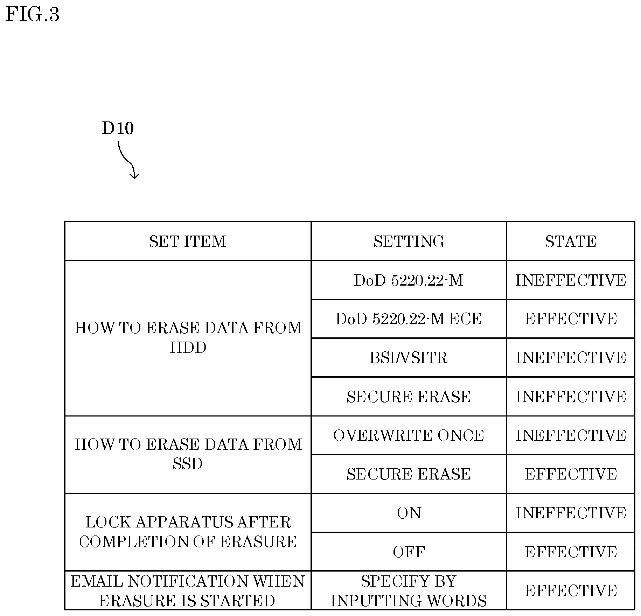

For example, the storage processing portion 31 stores, in the first storage portion 7, execution condition data D10 illustrated in Fig. 3. As illustrated in Fig. 3, the execution condition data D10 includes information indicating whether the setting is effective (has been specified) for each of the settings allowed to be specified on the execution condition setting screen X10. Fig. 3 illustrates a portion of the execution condition data D10 corresponding to the execution condition setting screen X10 illustrated in Fig. 2.

When a date and time for starting executing the erasure job that is stored in the first storage portion 7 is reached, the execution processing portion 32 executes the erasure job according to the execution condition stored in the first storage portion 7.

When the firmware 11 is updated and when the execution condition is stored in the first storage portion 7, the first determination processing portion 33 determines whether the execution condition allowed to be set is changed due to the update of the firmware 11.

For example, when the firmware 11 has been updated and when the execution condition data D10 is stored in the first storage portion 7, the first determination processing portion 33 generates, on the basis of the updated firmware 11, the execution condition data D10 in which all of the settings have been set to be ineffective. Then, when a combination of the settings included in the generated execution condition data D10 and a combination of the settings included in the execution condition data D10 stored in the first storage portion 7 are not the same, the first determination processing portion 33 determines that the execution condition allowed to be set has been changed due to the update of the firmware 11. Further, when the combination of the settings included in the generated execution condition data D10 and the combination of the settings included in the execution condition data D10 stored in the first storage portion 7 are the same, the first determination processing portion 33 determines that the execution condition allowed to be set has not been changed due to the update of the firmware 11.

When the first determination processing portion 33 has determined that the execution condition allowed to be set is changed due to the update of the firmware 11, the first report processing portion 34 reports this matter.

For example, when the first determination processing portion 33 has determined that the execution condition allowed to be set is changed due to the update of the firmware 11 and when a predetermined report condition is to be satisfied, the first report processing portion 34 reports that the execution condition allowed to be set is changed due to the update of the firmware 11. Further, when the first determination processing portion 33 has determined that the execution condition allowed to be set is changed due to the update of the firmware 11 and when the report condition is not to be satisfied, the first report processing portion 34 does not report that the execution condition allowed to be set is changed due to the update of the firmware 11.

For example, the report condition includes the condition that, due to the update of the firmware 11, the erasure job not be allowed to be executed according to the execution condition stored in the first storage portion 7. In other words, when the first determination processing portion 33 has determined that the execution condition allowed to be set is changed due to the update of the firmware 11 and when the erasure job is not allowed to be executed according to the execution condition stored in the first storage portion 7, the first report processing portion 34 reports that the execution condition allowed to be set is changed due to the update of the firmware 11. For example, when the execution condition data D10 generated by the first determination processing portion 33 does not include one of the settings set to be effective and included in the execution condition data D10 stored in the first storage portion 7, the first report processing portion 34 determines that, due to the update of the firmware 11, the erasure job is not allowed to be executed according to the execution condition stored in the first storage portion 7.

Further, the report condition includes the condition that the execution condition allowed to be set be increased due to the update of the firmware 11. In other words, when the first determination processing portion 33 has determined that the execution condition allowed to be set is changed due to the update of the firmware 11 and when the execution condition allowed to be set is increased, the first report processing portion 34 reports that the execution condition allowed to be set is changed due to the update of the firmware 11. For example, when the execution condition data D10 generated by the first determination processing portion 33 includes the setting, which is not included in the execution condition data D10 stored in the first storage portion 7, the first report processing portion 34 determines that the execution condition allowed to be set has been increased due to the update of the firmware 11.

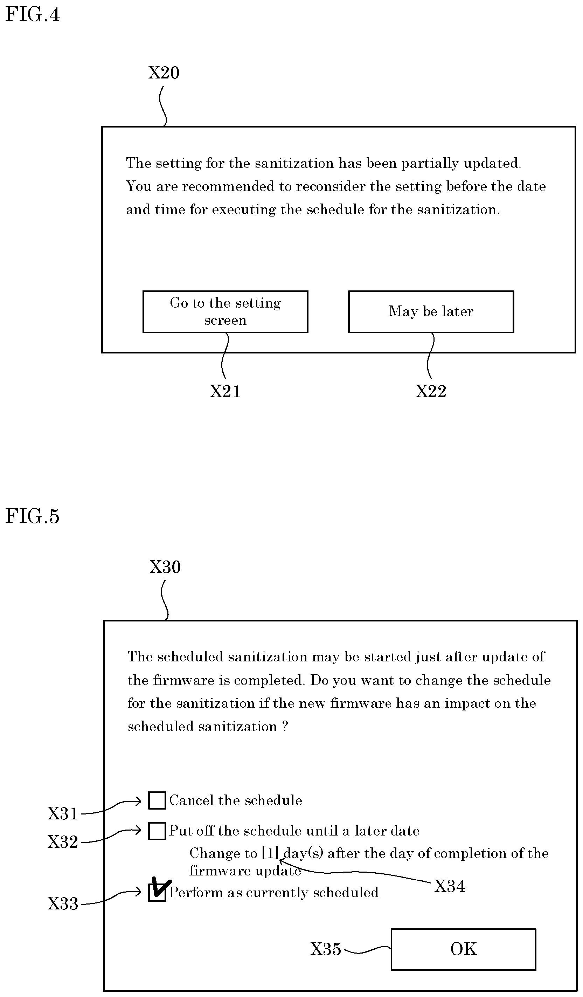

For example, when the first determination processing portion 33 has determined that the execution condition allowed to be set is changed due to the update of the firmware 11 and when the report condition is to be satisfied, the first report processing portion 34 displays a first report screen X20 illustrated in Fig. 4 on the operation display portion 5.

The first report screen X20 has a message indicating that the execution condition allowed to be set has been changed due to the update of the firmware 11 and that a user is recommended to reconsider the stored execution condition. Further, the first report screen X20 has operation keys X21 and X22 illustrated in Fig. 4.

The operation key X21 is used to input an instruction to display the execution condition setting screen X10 (refer to Fig. 2). The control portion 9 displays the execution condition setting screen X10 on the operation display portion 5 in response to an operation being performed by a user on the operation key X21. The operation key X22 is used to input an instruction to terminate display of the first report screen X20. The control portion 9 terminates the display of the first report screen X20 in response to an operation being performed by the user on the operation key X22.

When the firmware 11 is updated and when a date and time for starting executing the erasure job that is stored in the first storage portion 7 is reached during a specific period of time for which a predetermined first period of time elapses from start of the update of the firmware 11, the reception processing portion 35 receives a setting operation of a suspension period of time for which execution of the erasure job is suspended.

For example, when a schedule for performing a process of updating the firmware 11 has been set and when the date and time for starting executing the erasure job is stored in the first storage portion 7, the reception processing portion 35 determines whether the date and time for starting executing the erasure job is reached during the specific period of time starting at the time of starting performing the scheduled update process.

Further, when an instruction to perform the process of updating the firmware 11 has been input and when the date and time for starting executing the erasure job is stored in the first storage portion 7, the reception processing portion 35 determines whether the date and time for starting executing the erasure job is reached during the specific period of time starting at the time of inputting the instruction to perform the process.

For example, the first period of time is 24 hours. Note that the first period of time may be set discretionarily according to an operation performed by a user on the operation display portion 5.

For example, when the firmware 11 is updated and when the date and time for starting executing the erasure job that is stored in the first storage portion 7 is reached during the specific period of time, the reception processing portion 35 displays a setting operation receiving screen X30 illustrated in Fig. 5 on the operation display portion 5.

The setting operation receiving screen X30 has a message for a user. Further, the setting operation receiving screen X30 has check boxes X31, X32, and X33, a number-of-days input field X34, and an operation key X35 that are illustrated in Fig. 5.

An operation of specifying one of the check boxes X31, X32, and X33 is received on the setting operation receiving screen X30. The check box X31 corresponds to a state in which the set suspension period of time is indefinite. The check box X32 corresponds to a state in which the set suspension period of time is definite. The check box X33 corresponds to a state in which the suspension period of time is not set.

Further, when an operation performed on the check box X32 is received on the setting operation receiving screen X30, an operation of specifying the number of days of the suspension period of time is received in the number-of-days input field X34.

Furthermore, when an operation performed on one of the check boxes X31, X32, and X33 is received on the setting operation receiving screen X30, an operation performed on the operation key X35 is received.

When the operation performed on the operation key X35 is received while the check box X31 is operated, the control portion 9 sets the suspension period of time to be indefinite. Further, when the operation performed on the operation key X35 is received while the check box X32 is operated, the control portion 9 sets, as the suspension period of time, the number of days input to the number-of-days input field X34. Furthermore, when the operation performed on the operation key X35 is received while the check box X33 is operated, the control portion 9 does not set the suspension period of time.

Until an elapse of the suspension period of time set by the setting operation, the suspension processing portion 36 suspends execution of the erasure job that is performed by the execution processing portion 32.

For example, when the first report processing portion 34 reports that the execution condition allowed to be set is changed due to the update of the firmware 11, the suspension processing portion 36 suspends execution of the erasure job that is performed by the execution processing portion 32.

For example, when the suspension period of time has been set to be indefinite, the suspension processing portion 36 deletes a date and time for starting executing the erasure job (the setting) from the execution condition data D10 stored in the first storage portion 7.

Further, when the suspension period of time has been set to be definite, the suspension processing portion 36 changes, on the basis of a length of the suspension period of time, the date and time for starting executing the erasure job (the setting) that is included in the execution condition data D10 stored in the first storage portion 7.

Note that the reception processing portion 35 may receive the setting operation when the first report processing portion 34 reports that the execution condition allowed to be set is changed due to the update of the firmware 11. In this case, it is only required that, when the suspension period of time has been set by the setting operation, the suspension processing portion 36 suspend execution of the erasure job that is performed by the execution processing portion 32, until an elapse of the set suspension period of time.

When the execution condition is set, the second determination processing portion 37 determines whether the firmware 11 is the latest version.

For example, when the execution condition has been stored in the first storage portion 7, the second determination processing portion 37 determines whether the firmware is the latest version. Further, when an instruction to display the execution condition setting screen X10 (refer to Fig. 2) has been input, the second determination processing portion 37 may determine whether the firmware 11 is the latest version.

Further, when a period of time elapsed before a date and time for starting executing the erasure job that is stored in the first storage portion 7 is less than a predetermined second period of time, the second determination processing portion 37 determines whether the firmware 11 is the latest version.

For example, the second period of time is one week. Note that the second period of time may be set discretionarily according to an operation performed by a user on the operation display portion 5.

For example, when the second determination processing portion 37 is capable of communicating with an external server in which a latest version of the firmware 11 is stored, the second determination processing portion 37 determines whether the firmware 11 is the latest version, on the basis of information acquired from the server.

For example, the second determination processing portion 37 acquires, from the server, version information indicating a version of the latest firmware 11 stored in the server. Then, the second determination processing portion 37 determines whether the firmware 11 is the latest version, on the basis of the acquired version information.

Further, when the second determination processing portion 37 is not capable of communicating with the server, the second determination processing portion 37 determines whether the firmware 11 is the latest version, on the basis of a period of time elapsed from a timing of updating the firmware 11 last time.

For example, when the period of time elapsed from the timing of updating the firmware 11 last time exceeds a predetermined third period of time, the second determination processing portion 37 determines that the firmware 11 is not the latest version. For example, the third period of time is six months. Note that the third period of time may be set discretionarily according to an operation performed by a user on the operation display portion 5.

When the second determination processing portion 37 has determined that the firmware 11 is not the latest version, the second report processing portion 38 reports this matter.

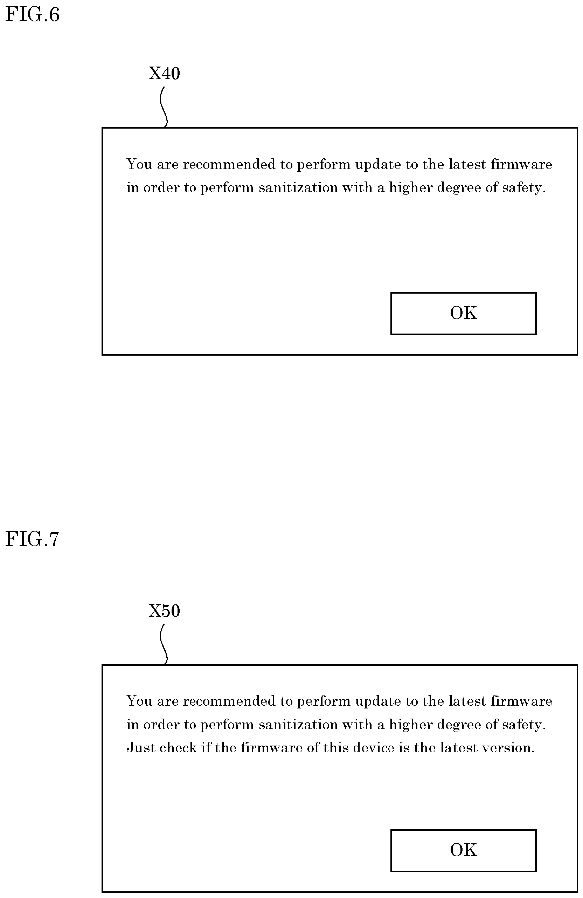

For example, when it has been determined, on the basis of information acquired from the server, that the firmware 11 is not the latest version, the second report processing portion 38 displays a second report screen X40 illustrated in Fig. 6 on the operation display portion 5.

The second report screen X40 illustrated in Fig. 6 has a message indicating that a user is recommended to perform update to the firmware 11 of the latest version.

Further, when it has been determined, on the basis of the period of time elapsed from the timing of updating the firmware 11 last time, that the firmware 11 is not the latest version, the second report processing portion 38 displays a second report screen X50 illustrated in Fig. 7 on the operation display portion 5.

The second report screen X50 illustrated in Fig. 7 has a message indicating that a user is recommended to perform update to the firmware 11 of the latest version. Further, the second report screen X50 illustrated in Fig. 7 has a message indicating that the user is urged to check whether the firmware 11 stored in the first storage portion 7 is the latest version.

Note that, when an instruction to execute the erasure job has been input, the second determination processing portion 37 may determine whether the firmware 11 is the latest version. In this case, when the second determination processing portion 37 has determined that the firmware 11 is not the latest version, the second report processing portion 38 may suspend execution of the erasure job and report this matter.

### Second Report Process

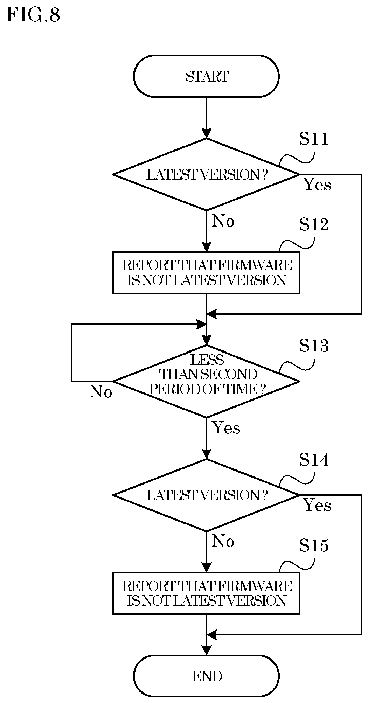

An example of a procedure of a second report process performed by the control portion 9 included in the image forming apparatus 100 is described with reference to Fig. 8. Here, Steps S11, S12, ... refer to numbers for a processing procedure (Steps) performed by the control portion 9.

The second report process is performed when the execution condition has been stored in the first storage portion 7. Note that a process of storing the execution condition in the first storage portion 7 is an example of performing storing according to the present disclosure, and is performed by the storage processing portion 31 of the control portion 9.

### Step S11

First, the control portion 9 determines, in Step S11, whether the firmware 11 stored in the first storage portion 7 is the latest version. The process of Step S11 is performed by the second determination processing portion 37 of the control portion 9.

Specifically, when the control portion 9 is capable of communicating with the server, the control portion 9 acquires the version information from the server. Then, the control portion 9 determines whether the firmware 11 is the latest version, on the basis of the version information.

Further, when it is difficult for the control portion 9 to communicate with the server, the control portion 9 determines whether the firmware 11 is the latest version, on the basis of a result of comparison between a period of time elapsed from a timing of updating the firmware 11 last time and the third period of time.

Here, when the control portion 9 has determined that the firmware 11 stored in the first storage portion 7 is the latest version (Yes in S11), the control portion 9 moves on to the process of Step S13. Further, when the firmware 11 stored in the first storage portion 7 is not the latest version (No in S11), the control portion 9 moves on to the process of Step S12.

### Step S12

In Step S12, the control portion 9 reports that the firmware 11 stored in the first storage portion 7 is not the latest version. The process of Step S12 is performed by the second report processing portion 38 of the control portion 9.

Specifically, when it has been determined, on the basis of the information acquired from the server, that the firmware 11 is not the latest version, the control portion 9 displays the second report screen X40 (refer to Fig. 6) on the operation display portion 5.

Further, when it has been determined, on the basis of the period of time elapsed from the timing of updating the firmware 11 last time, that the firmware 11 is not the latest version, the control portion 9 displays the second report screen X50 (refer to Fig. 7) on the operation display portion 5.

### Step S13

In Step S13, the control portion 9 determines whether a period of time elapsed before a date and time for starting executing the erasure job that is stored in the first storage portion 7 is less than the second period of time.

Here, when the control portion 9 has determined that the period of time elapsed before the date and time for starting executing the erasure job that is stored in the first storage portion 7 is less than the second period of time (Yes in S13), the control portion 9 moves on to the process of Step S14. Further, when the period of time elapsed before the date and time for starting executing the erasure job that is stored in the first storage portion 7 is not less than the second period of time (No in S13), the control portion 9 waits to determine, in Step S13, that the period of time elapsed before the date and time for starting executing the erasure job is less than the second period of time.

### Step S14

As in the process of Step S11, the control portion 9 determines, in Step S14, whether the firmware 11 stored in the first storage portion 7 is the latest version. The process of Step S14 is performed by the second determination processing portion 37 of the control portion 9.

Here, when the control portion 9 has determined that the firmware 11 stored in the first storage portion 7 is the latest version (Yes in S14), the control portion 9 terminates the second report process. Further, when the firmware 11 stored in the first storage portion 7 is not the latest version (No in S14), the control portion 9 moves on to the process of Step S15.

### Step S15

As in the process of Step S12, the control portion 9 reports, in Step S15, that the firmware 11 stored in the first storage portion 7 is not the latest version. The process of Step S15 is performed by the second report processing portion 38 of the control portion 9.

### Process of Setting Suspension Period of Time

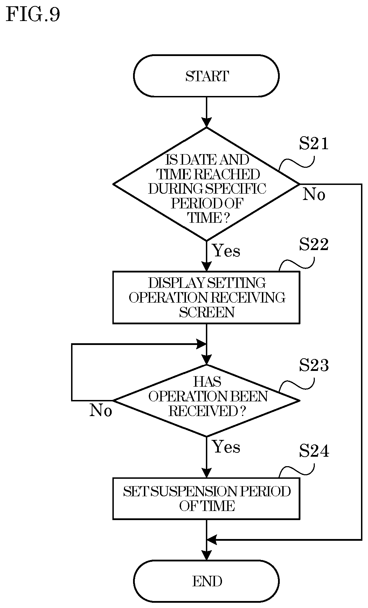

Next, a procedure of a process of setting a suspension period of time that is performed by the control portion 9 included in the image forming apparatus 100 is described with reference to Fig. 9.

The process of setting a suspension period of time is performed when a schedule for performing a process of updating the firmware 11 has been set and when the date and time for starting executing the erasure job is stored in the first storage portion 7. Further, the process of setting a suspension period of time is performed when an instruction to perform the process of updating the firmware 11 has been input and when the date and time for starting executing the erasure job is stored in the first storage portion 7.

### Step S21

First, the control portion 9 determines, in Step S21, whether the date and time for starting executing the erasure job is reached during the specific period of time.

Here, when the control portion 9 has determined that the date and time for starting executing the erasure job is reached during the specific period of time (Yes in S21), the control portion 9 moves on to the process of Step S22. Further, when the date and time for starting executing the erasure job is not reached during the specific period of time (No in S21), the control portion 9 terminates the process of setting a suspension period of time.

### Step S22

In Step S22, the control portion 9 displays the setting operation receiving screen X30 (refer to Fig. 5) on the operation display portion 5. The process of Step S22 is performed by the reception processing portion 35 of the control portion 9.

### Step S23

In Step S23, the control portion 9 determines whether an operation performed on the operation key X35 on the setting operation receiving screen X30 has been received.

Here, when the control portion 9 has determined that the operation performed on the operation key X35 has been received (Yes in S23), the control portion 9 moves on to the process of Step S24. Further, when the operation performed on the operation key X35 has not been received (No in S23), the control portion 9 waits for the operation performed on the operation key X35 to be received in Step S23.

### Step S24

In Step S24, the control portion 9 sets the suspension period of time according to the operation performed by a user and received on the setting operation receiving screen X30.

Specifically, when the operation performed on the operation key X35 is received while the check box X31 is operated, the control portion 9 sets the suspension period of time to be indefinite. Further, when the operation performed on the operation key X35 is received while the check box X32 is operated, the control portion 9 sets, as the suspension period of time, the number of days input to the number-of-days input field X34. Note that, when the operation performed on the operation key X35 is received while the check box X33 is operated, the control portion 9 does not set the suspension period of time.

### First Report Process

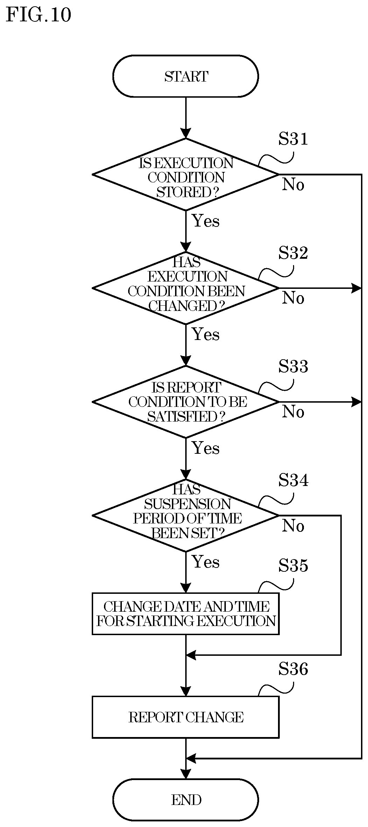

Next, an example of a procedure of a first report process performed by the control portion 9 included in the image forming apparatus 100, and a report method according to the present disclosure are described with reference to Fig. 10. Note that the first report process is performed when the firmware 11 stored in the first storage portion 7 is updated.

### Step S31

First, the control portion 9 determines, in Step S31, whether the execution condition is stored in the first storage portion 7.

Specifically, when the execution condition data D10 is stored in the first storage portion 7, the control portion 9 determines that the execution condition is stored in the first storage portion 7.

Here, when the control portion 9 determines that the execution condition is stored in the first storage portion 7 (Yes in S31), the control portion 9 moves on to the process of Step S32. Further, when the execution condition is not stored in the first storage portion 7 (No in S31), the control portion 9 terminates the first report process.

### Step S32

In Step S32, the control portion 9 determines whether the execution condition allowed to be set has been changed due to update of the firmware 11. The process of Step S32 is an example of performing determination according to the present disclosure, and is performed by the first determination processing portion 33 of the control portion 9.

Specifically, the control portion 9 generates, on the basis of the updated firmware 11, the execution condition data D10 in which all of the settings have been set to be ineffective. Then, when a combination of the settings included in the generated execution condition data D10 and a combination of the settings included in the execution condition data D10 stored in the first storage portion 7 are not the same, the control portion 9 determines that the execution condition allowed to be set has been changed due to the update of the firmware 11. Further, when the combination of the settings included in the generated execution condition data D10 and the combination of the settings included in the execution condition data D10 stored in the first storage portion 7 are the same, the control portion 9 determines that the execution condition allowed to be set has not been changed due to the update of the firmware 11.

Here, when the control portion 9 has determined that the execution condition allowed to be set has been changed due to the update of the firmware 11 (Yes in S32), the control portion 9 moves on to the process of Step S33. Further, when the execution condition allowed to be set has not been changed due to the update of the firmware 11 (No in S32), the control portion 9 terminates the first report process.

### Step S33

In Step S33, the control portion 9 determines whether the report condition is to be satisfied.

Specifically, when, due to the update of the firmware 11, the erasure job is not allowed to be executed according to the execution condition stored in the first storage portion 7, the control portion 9 determines that the report condition is to be satisfied.

Further, when the execution condition allowed to be set is increased due to the update of the firmware 11, the control portion 9 determines that the report condition is to be satisfied. This makes it possible to give a user an opportunity to consider the use of a newly added function (such as a method for erasing data with a higher degree of safety).

Here, when the control portion 9 has determined that the report condition is to be satisfied (Yes in S33), the control portion 9 moves on to the process of Step S34. Further, when the report condition is not to be satisfied (No in S33), the control portion 9 terminates the first report process.

### Step S34

In Step S34, the control portion 9 determines whether the suspension period of time has been set.

Here, when the control portion 9 has determined that the suspension period of time has been set (Yes in S34), the control portion 9 moves on to the process of Step S35. Further, when the suspension period of time has not been set (No in S34), the control portion 9 moves on to the process of Step S36.

### Step S35

In Step S35, the control portion 9 suspends execution of the erasure job. The process of Step S35 is performed by the suspension processing portion 36 of the control portion 9.

Specifically, when the suspension period of time has been set to be indefinite, the control portion 9 deletes a date and time for starting executing the erasure job (the setting) from the execution condition data D10 stored in the first storage portion 7. Further, when the suspension period of time has been set to be definite, the control portion 9 changes, on the basis of a length of the suspension period of time, the date and time for starting executing the erasure job (the setting) that is included in the execution condition data D10 stored in the first storage portion 7. This makes it possible to give a user the time to reconsider the execution condition when a period of time from the update of the firmware 11 being started to the execution of the erasure job being started is short (when the date and time for starting executing the erasure job is reached during the specific period of time).

### Step S36

In Step S36, the control portion 9 reports that the execution condition allowed to be set is changed due to the update of the firmware 11. The process of Step S36 is an example of performing report according to the present disclosure, and is performed by the first report processing portion 34 of the control portion 9.

Specifically, the control portion 9 displays the first report screen X20 (refer to Fig. 4) on the operation display portion 5. This makes it possible to give a user an opportunity to reconsider the prestored execution condition.

Note that, when the user selects, on the setting operation receiving screen X30, to not set the suspension period of time, the process of Step S36 may be omitted.

As described above, the image forming apparatus 100 makes it possible to give a user an opportunity to reconsider the prestored execution condition when the execution condition allowed to be set is changed due to the update of the firmware 11.

Note that a job in the present disclosure does not necessarily have to be limited to the erasure job. For example, the storage processing portion 31 may store the execution condition for a printing job in the first storage portion 7.

Further, the execution condition stored in the first storage portion 7 does not necessarily have to be limited to the execution condition for the job scheduled to be executed. Specifically, data that includes a plurality of the execution conditions stored in the first storage portion 7 may be data (a program) used to set a plurality of the execution conditions for the job at a time.

It is to be understood that the embodiments herein are illustrative and not restrictive, since the scope of the disclosure is defined by the appended claims rather than by the description preceding them, and all changes that fall within metes and bounds of the claims, or equivalence of such metes and bounds thereof are therefore intended to be embraced by the claims.

## Claims

1. An electronic device (100), comprising:
a storage processing portion (31) that stores an execution condition for a job in a predetermined first storage portion (7), the execution condition being set by an operation performed by a user;
a first determination processing portion (33) that determines whether the execution condition allowed to be set is changed due to update of firmware (11) of the electronic device (100), the determination being performed when the firmware (11) is updated and when the execution condition is stored in the first storage portion (7); and
a first report processing portion (34) that reports that the execution condition allowed to be set is changed due to the update of the firmware (11), the reporting being performed when the first determination processing portion (33) has determined that the execution condition allowed to be set is changed due to the update of the firmware (11).

2. The electronic device (100) according to claim 1, wherein
when the first determination processing portion (33) has determined that the execution condition allowed to be set is changed due to the update of the firmware (11) and when the job is not allowed to be executed according to the execution condition stored in the first storage portion (7), the first report processing portion (34) reports that the execution condition allowed to be set is changed due to the update of the firmware (11).

3. The electronic device (100) according to claim 1 or 2, wherein
when the first determination processing portion (33) has determined that the execution condition allowed to be set is changed due to the update of the firmware (11) and when the execution condition allowed to be set is increased, the first report processing portion (34) reports that the execution condition allowed to be set is changed due to the update of the firmware (11).

4. The electronic device (100) according to any one of claim 1 to 3, wherein
the execution condition includes a date and time for starting executing the job, and
the electronic device (100) comprises:
an execution processing portion (32) that executes the job according to the execution condition stored in the first storage portion (7), the execution being performed when the date and time for starting executing the job that is stored in the first storage portion (7) is reached;
a reception processing portion (35) that receives a setting operation a suspension period of time for which the execution of the job is suspended, the reception being performed when the firmware (11) is updated and when the date and time for starting executing the job that is stored in the first storage portion (7) is reached during a specific period of time for which a predetermined first period of time elapses from start of the update of the firmware (11); and
a suspension processing portion (36) that suspends, until an elapse of the suspension period of time set by the setting operation, the execution of the job that is performed by the execution processing portion (32).

5. The electronic device (100) according to claim 4, wherein
when the first report processing portion (34) reports that the execution condition allowed to be set is changed due to the update of the firmware (11), the suspension processing portion (36) suspends the execution of the job that is performed by the execution processing portion (32).

6. The electronic device (100) according to any one of claim 1 to 5, further comprising
a second storage portion (8), wherein
the job includes an erasure job executed to erase data stored in the second storage portion (8), such that the data becomes unrecoverable,
the execution condition includes a date and time for starting executing the job, and
the electronic device (100) comprises:
an execution processing portion (32) that executes the job according to the execution condition stored in the first storage portion (7), the execution being performed when the date and time for starting executing the job that is stored in the first storage portion (7) is reached;
a second determination processing portion (37) that determines, when the execution condition is set, whether the firmware (11) is a latest version; and
a second report processing portion (38) that reports that the firmware (11) is not the latest version, the reporting being performed when the second determination processing portion (37) has determined that the firmware (11) is not the latest version.

7. The electronic device (100) according to any one of claim 1 to 6, further comprising
a second storage portion (8), wherein
the job includes an erasure job executed to erase data stored in the second storage portion (8), such that the data becomes unrecoverable,
the execution condition includes a date and time for starting executing the job, and
the electronic device (100) comprises:
an execution processing portion (32) that executes the job according to the execution condition stored in the first storage portion (7), the execution being performed when the date and time for starting executing the job that is stored in the first storage portion (7) is reached;
a second determination processing portion (37) that determines whether the firmware (11) is a latest version, the determination being performed when a period of time elapsed before the date and time for starting executing the job that is stored in the first storage portion (7) is less than a predetermined second period of time; and
a second report processing portion (38) that reports that the firmware (11) is not the latest version, the reporting being performed when the second determination processing portion (37) has determined that the firmware (11) is not the latest version.

8. The electronic device (100) according to claim 6 or 7, wherein
on a basis of information acquired from an external server in which the firmware (11) of the latest version is stored, the second determination processing portion (37) determines whether the firmware (11) is the latest version.

9. The electronic device (100) according to any one of claim 6 to 8, wherein
on a basis of a period of time elapsed from a timing of updating the firmware (11) last time, the second determination processing portion (37) determines whether the firmware (11) is the latest version.

10. The electronic device (100) according to any one of claim 1 to 9, further comprising
at least one of an image reading portion (2) that reads a document to obtain an image of the document, or an image forming portion (3) that forms an image on a sheet.

11. A report method that is performed by an electronic device (100), the report method comprising:
storing an execution condition for a job in a predetermined first storage portion (7), the execution condition being set by an operation performed by a user;
when firmware (11) of the electronic device (100) is updated and when the execution condition is stored in the first storage portion (7), determining whether the execution condition allowed to be set is changed due to the update of the firmware (11); and
when the execution condition allowed to be set has been determined by the determination to be changed due to the update of the firmware (11), reporting that the execution condition allowed to be set is changed due to the update of the firmware (11).
